# EUROPEAN PATENT APPLICATION

(11) **EP 4 550 487 A1**
(43) Date of publication of application: **07.05.2025**
(21) Application number: 22949337.4
(22) Date of filing: 28.06.2022
(51) Int. Cl.: H01M 8/1213, H01M 4/86, H01M 8/0273, H01M 8/0282, H01M 8/12

(54) **SOLID OXIDE FUEL CELL AND METHOD FOR PRODUCING SAME**

(71) Applicant: NISSAN MOTOR CO., LTD., Kanagawa 221-0023 (JP)
(72) Inventor: IRITSUKI, Keita, Atsugi-shi, Kanagawa 243-0123 (JP)
(74) Representative: Grünecker Patent- und Rechtsanwälte PartG mbB
(86) International application number: PCT/JP2022/025856
(87) International publication number: WO 2024/004061

(57) **Abstract**

A solid oxide fuel cell according to the present invention is provided with: a first electrode structure; an electrolyte layer that is superposed on the first electrode structure; and a second electrode structure that is superposed on the electrolyte layer. The first electrode structure comprises a first porous metal support layer and a first electrode layer. With respect to this solid oxide fuel cell, the first electrode structure is provided with: a filled part; and a first dam which is positioned outside the filled part when viewed along the stacking direction, while being densified so as to prevent the leakage of a filler to the outside of the filled part.

## Description

### TECHNICAL FIELD

The present disclosure relates to a solid oxide fuel cell and a manufacturing method thereof.

### BACKGROUND ART

A solid oxide fuel cell is a fuel cell that uses a solid material as an electrolyte. The solid oxide fuel cell generally includes an electrolyte layer, an anode and a cathode. The anode and the cathode are provided to place the electrolyte layer therebetween. An anode gas is supplied to the anode, and a cathode gas is supplied to the cathode when the solid oxide fuel cell generates power. A metal support layer may be provided as a support material on an outer side of the anode and/or the cathode. The metal support layer should have gas permeability such that a gas is supplied from the outer side to the electrode. Therefore, the metal support layer is generally formed of a porous material.

Since the metal support layer is porous, there is a possibility that the supplied gas leaks at an end portion of the metal support layer. As a result, there is a possibility that gases will be mixed with each other between the two electrodes. In order to achieve efficient power generation, it is necessary to prevent gas leakage at the end portion so that the gases are separated between the two electrodes.

In relation to the above, Patent Document 1 (JP2008-159428A) describes forming a gas sealing region by filling at least one region of a porous body with metallic glass and manufacturing the solid oxide fuel cell using the porous body.

### SUMMARY OF INVENTION

According to the technique of Patent Document 1, gas leakage is prevented in the gas sealing region filled with the metallic glass. However, a solid oxide fuel cell may become hot during operation. As a result, there is a possibility that the filling metallic glass is softened. In addition, internal pressure of one electrode may increase during operation as the gas supplied. As a result, there is a possibility that gas sealability is impaired as the softened metallic glass flows to outer side due to increased internal pressure.

Accordingly, an object of the present disclosure is to provide a solid oxide fuel cell and a manufacturing method thereof in which the gas sealability is not impared even in a high temperature and a high internal pressure.

The solid oxide fuel cell according to the present disclosure includes a porous first electrode structure, an electrolyte layer laminated on the first electrode structure, and a second electrode structure laminated on the electrolyte layer. The first electrode structure has a first porous metal support layer, and a first electrode layer provided between the first porous metal support layer and the electrolyte layer. A filled portion and a first dam are provided in the first electrode structure. A filled portion is a region where pores are filled with a filling material. The filled portion is disposed to be in a looped shape when viewed in a laminating direction. The first dam is positioned at an outer side of the filled portion when viewed along the laminating direction. The first dam is a densified portion that prevents the filling material from leaking to the outer side of the filled portion.

### BRIEF DESCRIPTION OF DRAWINGS

FIG. 1 is a top view of a solid oxide fuel cell according to a first embodiment.
FIG. 2 is a cross-sectional view showing the solid oxide fuel cell according to the first embodiment.
FIG. 3 is a schematic cross-sectional view showing a solid oxide fuel cell during a manufacturing process.
FIG. 4 is a schematic cross-sectional view showing the solid oxide fuel cell during the manufacturing process.
FIG. 5 is a schematic cross-sectional view showing the solid oxide fuel cell during the manufacturing process.
FIG. 6 is a schematic cross-sectional view showing the solid oxide fuel cell during the manufacturing process.
FIG. 7 is a schematic cross-sectional view showing the solid oxide fuel cell during the manufacturing process.
FIG. 8 is a schematic cross-sectional view showing an end portion of a solid oxide fuel cell according to a second embodiment.

### DESCRIPTION OF EMBODIMENTS

Hereinafter, embodiments of the present disclosure will be described with reference to the drawings.

### [First Embodiment]

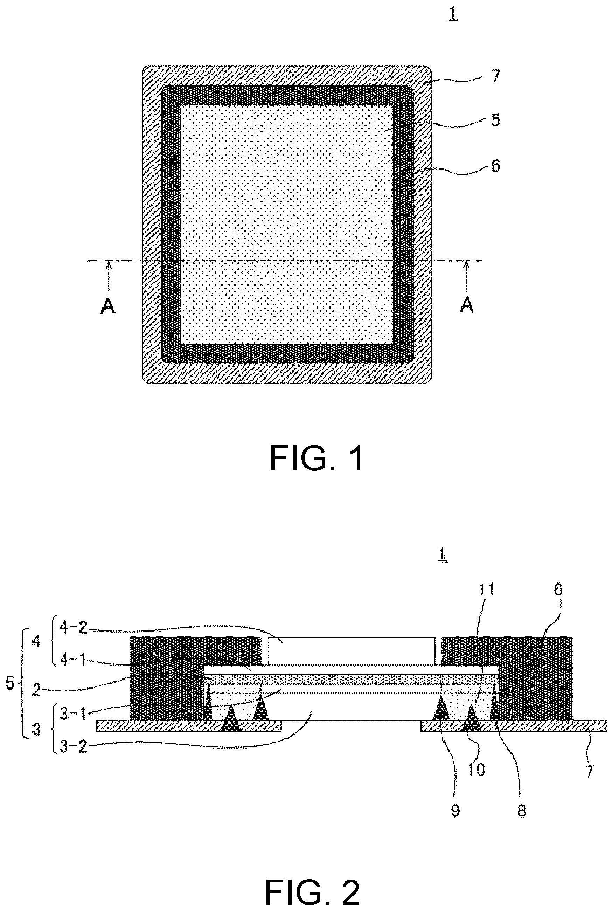

FIG. 1 is a view of a battery cell of a solid oxide fuel cell 1 according to a first embodiment when viewed along a laminating direction, that is, a top view of the solid oxide fuel cell. FIG. 2 is a cross-sectional view showing the solid oxide fuel cell 1 according to the first embodiment and is a view showing a cross-section taken along line A-A in FIG. 1.

As shown in FIGS. 1 and 2, the solid oxide fuel cell 1 schematically includes a metal frame 7, a laminate 5, and a sealing material 6. The laminate 5 is supported by the metal frame 7. The sealing material 6 is provided to cover an end portion of the laminate 5.

The laminate 5 includes an electrolyte layer 2, a first electrode structure 3, and a second electrode structure 4. They are laminated. That is, the electrolyte layer 2 is laminated on the first electrode structure 3, and the second electrode structure 4 is laminated on the electrolyte layer 2. That is, the electrolyte layer 2 is provided between the first electrode structure 3 and the second electrode structure 4. One of the first electrode structure 3 and the second electrode structure 4 functions as an anode and the other functions as a cathode. The first electrode structure 3 may be the anode, or the second electrode structure 4 may be the anode. An anode gas is supplied to one of the first electrode structure 3 and the second electrode structure 4, and a cathode gas is supplied to the other during operation.

The laminate 5 is supported by the metal frame 7 at the first electrode structure 3 side. Specifically, an outer peripheral portion of the first electrode structure 3 is positioned on a frame of the metal frame 7. In addition, in the outer peripheral portion, the laminate 5 is bonded to the metal frame 7 by welding. In FIG. 2, a welded section is shown as a welded portion 10.

In addition, a central portion of a lower surface of the first electrode structure 3 is positioned on an opening portion of the metal frame 7. That is, the lower surface of the first electrode structure 3 is exposed at the central portion. By such configuration, it is possible to supply a gas (anode gas or cathode gas) to the first electrode structure 3 through the opening portion of the metal frame 7.

The electrolyte layer 2 is a dense ceramic layer. Here, ceramic means a sintered body of an inorganic material and encompasses not only a non-metal oxide but also a metal oxide. The electrolyte layer 2 may be configured so that an oxide ion is conductive to while being impermeable to a gas. For example, the electrolyte layer 2 may be formed of solid oxide ceramics. The solid oxide ceramics are not specifically limited thereto but may be, for example, a zirconia-containing material. The zirconia-containing material may be stabilized zirconia doped with yttria, neodymium oxide, samarium, gadolinium, scandium, etc. A thickness of the electrolyte layer 2 is, for example, 0.5 to 20 µm, preferably 1 to 10 µm.

The first electrode structure 3 and the second electrode structure 4 each has a porous structure. In addition, the first electrode structure 3 and the second electrode structure 4 each has a two-layer structure. Specifically, the first electrode structure 3 includes a first electrode layer 3-1 and a first porous metal support layer 3-2. The second electrode structure 4 includes a second electrode layer 4-1 and a second porous metal support layer 4-2. The first electrode layer 3-1 and the second electrode layer 4-1 are provided to place the electrolyte layer 2 therebetween and are bonded to the electrolyte layer 2. The first porous metal support layer 3-2 and the second porous metal support layer 4-2 are provided at an outer side of the first electrode layer 3-1 and the second electrode layer 4-1, respectively.

The first electrode layer 3-1 and the second electrode layer 4-1 are layers in which an electron is transferred during power generation. The first electrode layer 3-1 and the second electrode layer 4-1 are configured of a porous ceramic layer. This porous ceramic layer may be formed, for example, of the solid oxide ceramics. The solid oxide ceramics for example, may be stabilized zirconia doped with yttria, neodymium oxide, samarium, gadolinium, scandium, etc. A thickness of the first electrode layer 3-1 and the second electrode layer 4-1 is, for example, 0.3 to 50 *µ*m, preferably 0.5 to 30 *µ*m, respectively.

The first porous metal support layer 3-2 and the second porous metal support layer 4-2 are provided for a purpose of shape retention, or the like. The shape is retained by providing the support layer even when the thicknesses of the electrolyte layer 2, the first electrode layer 3-1, and the second electrode layer 4-1 are small. A thickness of each of porous metal support layers (3-2 and 4-2) is determined from a viewpoint of shape retention, or the like, and is, for example, 50 to 1000 *µ*m, preferably 100 to 500 *µ*m. Each of the porous metal support layers (3-2 and 4-2) may be formed of, for example, Fe and Cr.

Here, in the present embodiment, a filled portion 11, a first dam 8, and a second dam 9 are provided in the first electrode structure 3.

The filled portion 11 is a region where pores are filled with a filling material. The filled portion 11 has a shape that looks like a looped shape when viewed along the laminating direction. The filled portion 11 is disposed at the outer peripheral portion of the first electrode structure 3. Specifically, the filled portion 11 is provided at a region where the first electrode structure 3 and the metal frame 7 are overlapped. Therefore, a width of the filled portion 11 is smaller than a width of the overlapping portion of the first electrode structure 3 and the metal frame 7 when viewed along the laminating direction.

The filled portion 11 is provided to prevent gas from leaking from an outer peripheral end portion of the first electrode structure 3. As described above, the first electrode structure 3 is porous. Therefore, there is a possibility that the gas supplied to the first electrode structure 3 may leak to the outside from the outer end portion in a case where the filled portion 11 is not provided. In particular, since the first porous metal support layer 3-2 is designed to have gas permeability, the gas is likely to leak at the end portion. The sealing material 6 is provided at the end portion of the laminate 5, but it is difficult to completely prevent gas leakage only by the sealing material 6. However, according to the present embodiment, since the filled portion 11 is provided, the gas supplied to the first electrode structure 3 is difficult to leak to the outside from the end portion.

Although not particularly limited, the filling material may be at least one selected from a group consisting of metal powder, glass, and ceramics (ceria, zirconia, etc.).

It is preferable that the filled portion 11 is provided in a depth reaching to the electrolyte layer 2 from a surface (lower surface) of the first electrode structure. Gas leakage in a side direction between the metal frame 7 and the electrolyte layer 2 may be more reliably prevented as the filled portion 11 is provided in such depth. In addition, a leakage path is reduced even if gas leakage is not completely prevented at the filled portion 11, thereby reducing internal pressure applied to the sealing material 6. Therefore, a damage to the sealing material 6 due to the increased internal pressure may be prevented, and reliability of a sealing function of the end portion of the laminate 5 is improved.

The first dam 8 is positioned at an outer side of the filled portion 11 when viewed along the laminating direction. The first dam 8 is a densified portion that prevents the filling material from leaking to the outer side of the filled portion 11. The first dam 8 is formed to be in a looped shape along the outer peripheral portion of the first electrode structure 3 when viewed along the laminating direction.

As described above, the solid oxide fuel cell 1 may become hot during operation of the solid oxide fuel cell 1. As a result, there may a case where the filling material filled in the filled portion 11 is softened. Furthermore, the internal pressure may increase since gas is supplied to the first electrode structure 3. In case the first dam 8 is not provided, there is a possibility that the function of the filled portion 11 is impaired as the fluidized filling material may flow to the outer side as the internal pressure increases. However, according to the present embodiment, the filling material is blocked since the first dam 8 is provided. Therefore, the function of the filled portion 11, that is, gas sealability is maintained even at high temperature and high internal pressure.

The first dam 8 should be densified enough not to be fluidized even when the filling material becomes hot enough to be fluidized. The first dam 8 may be formed, for example, by heating and melting a metal configuring the first porous metal support layer 3-2 and filling the pores with the molten metal. For example, the first dam 8 may be formed by wire electrical discharge processing, a laser welding bead, etc.

The second dam 9 is positioned at an inner side of the filled portion 11 when viewed along the laminating direction. The second dam 9 is a densified portion that prevents the filling material from leaking to the inner side of the filled portion 11. The second dam 9 may be formed in the same method as that of the first dam 8. Leakage of the filling material to the inner side as well as to the outer side is prevented as the second dam 9 is provided.

The first dam 8 and the second dam 9 are both positioned at the region where the first electrode structure 3 and the metal frame 7 are overlapped. In addition, the first dam 8 and the second dam 9 are spaced apart. That is, the width of the first dam 8 itself and the width of the second dam 9 itself are each smaller than 0.5 times the width of the region where the first electrode structure 3 and the metal frame 7 are overlapped.

It is preferable that the first dam 8 is provided in a depth reaching from the surface (lower surface) of the first electrode structure 3 to the electrolyte layer 2. The leakage of the filling material is more reliably prevented if the first dam 8 is provided in such depth.

On the other hand, it is preferable that the second dam 9 is provided in a smaller depth than that of the first dam 8 from the surface of the first electrode structure 3. That is, it is preferable that the second dam 9 does not reach the electrolyte layer 2. The deeper the depth of the dam, the easier it is to prevent the leakage of the filling material. However, the electrolyte layer 2 may be damaged when the second dam 9 is formed in a depth that reaches the electrolyte layer 2. As a result, there is a possibility that gas is leak through the damaged area. In contrast, damage to the electrolyte layer 2 is prevented when the depth of second dam 9 does not reach the electrolyte layer 2. Therefore, the gas leakage due to damage to the electrolyte layer 2 is prevented.

The first dam 8 is positioned at a part surrounded by the filled portion 11 and the sealing material 6. Therefore, there is almost no concern about the gas leakage through the damaged area even when the electrolyte layer 2 on the first dam 8 is damaged. Accordingly, it is preferable that the first dam 8 is provided in a depth reaching the electrolyte layer 2 as described above from the viewpoint of more reliably preventing the leakage of the filling material.

Next, the welded portion 10 will be described. As described above, the laminate 5 is bonded to the metal frame 7 by the welded portion 10. Here, the welded portion 10 is formed to be in a looped shape when viewed along the laminating direction. In addition, the welded portion 10 is provided at the filled portion 11. That is, the welded portion 10 is provided between the first dam 8 and the second dam 9. Gas is prevented from leaking to the outer side through an interface between the first electrode structure 3 and the metal frame 7 since the welded portion 10 is provided at such location. In addition, a welding bead configuring the welded portion 10 becomes denser at the filled portion 11 when metal is filled in the filled portion 11 as the filling material. Therefore, the gas is more reliably sealed by the welded portion 10.

Next, a configuration of the second electrode structure 4 side will be described.

As shown in FIG. 2, the second porous metal support layer 4-2 is not provided at the outer peripheral portion of the second electrode structure 4. That is, an outer shape of the second porous metal support layer 4-2 is positioned at a further inner side than the outer shape of the second electrode layer 4-1 and the electrolyte layer 2 when viewed along the laminating direction. As a result, the second electrode layer 4-1 is exposed in the outer peripheral portion of the laminate 5. The sealing material 6 is provided to cover the exposed portion of the second electrode layer 4-1 and the end portion of the laminate 5. The exposed portion of the second electrode layer 4-1 is a portion formed by removing the second porous metal support layer 4-2 by etching or the like, and is rougher than a surface of the second porous metal support layer 4-2. The sealing material 6 may be firmly bonded to the exposed portion of the second electrode layer 4-1 by an anchoring effect by such configuration.

Here, in an example shown in FIG. 2, the second electrode layer 4-1 is exposed in the outer peripheral portion. However, the electrolyte layer 2 may be exposed instead of the second electrode layer 4-1, and an exposed portion of the electrolyte layer 2 may be covered by the sealing material 6.

As described above, a configuration of the solid oxide fuel cell 1 according to the first embodiment has been described. In addition, a configuration of a battery cell of the solid oxide fuel cell 1 has been described in the above-described example, but the solid oxide fuel cell 1 may be provided as a battery module in which a plurality of battery cells are stacked.

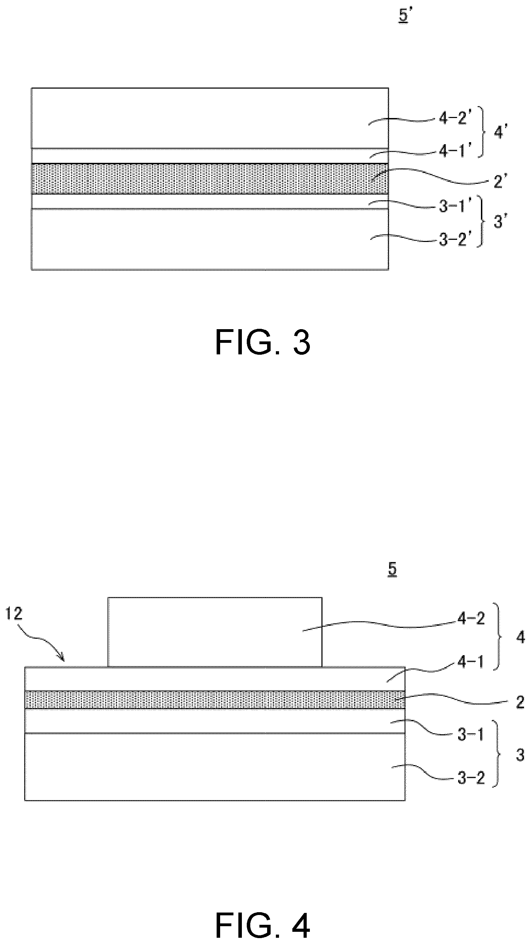

Next, an example of a manufacturing method of the solid oxide fuel cell 1 according to the present embodiment will be described. FIGS. 3 to 7 are schematic cross-sectional views showing the solid oxide fuel cell 1 during the manufacturing process.

### (Step S1) Manufacturing of a green sheet laminate

First, as shown in FIG. 3, a green sheet laminate 5' is manufactured in which a green sheet 3' for the first electrode structure, a green sheet 2' for the electrolyte layer, and a green sheet 4' for the second electrode structure are laminated. Here, the green sheet 3' for the first electrode structure includes a green sheet 3-2' for the first porous metal support layer and a green sheet 3-1' for the first electrode layer. In addition, the green sheet 4' for the second electrode structure includes a green sheet 4-2' for the second porous metal support layer and a green sheet 4-1' for the second electrode layer. The green sheet laminate 5' may be formed, for example, by a tape casting method. Specifically, first, a slurry containing a raw material of each layer included in a laminate is prepared. Then, each prepared slurry is formed to have a sheet shape. Accordingly, a green sheet for each layer is obtained. Furthermore, the obtained green sheet is laminated. Accordingly, the green sheet laminate 5' is obtained.

### (Step S2) Sintering

Next, the green sheet laminate 5' is sintered. Accordingly, a sintered laminate is obtained, in which the first porous metal support layer 3-2, the first electrode layer 3-1, the electrolyte layer 2, the second electrode layer 4-1, and the second porous metal support layer 4-2 are laminated in this order. Here, in this case, since the sintered laminate has a symmetrical structure with the electrolyte layer 2 interposed there between, a warpage in the laminate 5 during sintering is difficult to occur.

### (Step S3) Formation of the exposed portion

Next, as shown in FIG. 4, at least a part of the second electrode structure 4 in the outer peripheral portion of the sintered laminate is removed to expose the second electrode layer 4-1 or the electrolyte layer 2. Accordingly, the exposed portion 12 is formed. The second electrode structure 4 may be removed chemically, for example, by etching with a solution (e.g., acid). Alternatively, the second electrode structure 4 may be removed by mechanical processing. In the exposed portion 12 formed by the above method, a surface roughness is rougher than that of the surface of the second porous metal support layer 4-2. Therefore, the sealing material 6 may be firmly bonded to the laminate 5 by the anchoring effect when providing the sealing material 6 in a post-process.

### (Step S4) Formation of the dam

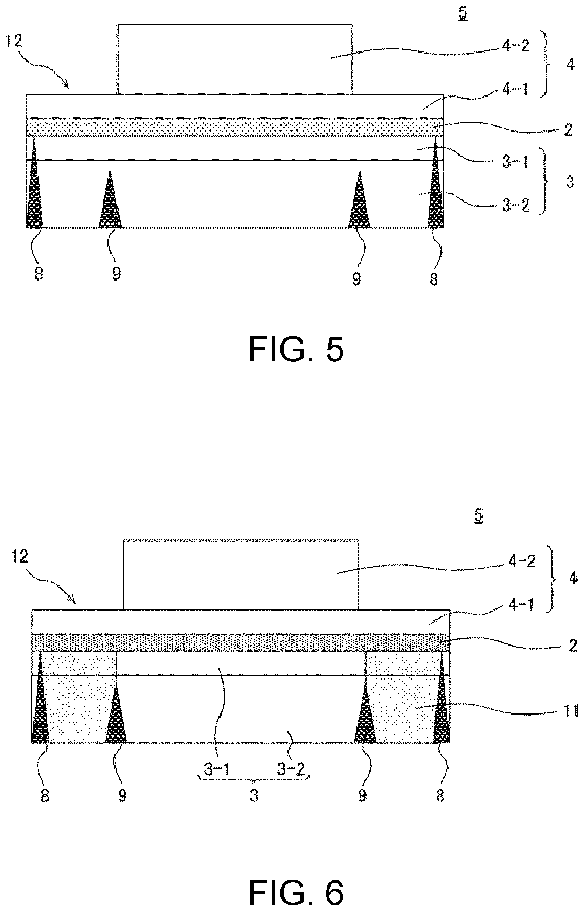

Next, as shown in FIG. 5, the first dam 8 and the second dam 9 are formed in the first electrode structure 3. The first dam 8 and the second dam 9 may be formed by wire electrical discharge processing, a laser welding bead, etc., as described above. In this case, it is preferable to form the first dam 8 in a depth that reaches the electrolyte layer 2 as described above. It is preferable to form the second dam 9 in a depth that does not reach the electrolyte layer 2.

### (Step S5) Formation of the filled portion

Next, as shown in FIG. 6, the filling material is supplied between the first dam 8 and the second dam 9 to form the filled portion 11. In this case, since the first dam 8 and the second dam 9 are provided, the filling material is prevented from unintentionally leaking to an outer side of the first dam 8 or an inner side of the second dam 9.

When using metal powder as the filling material, for example, metal may be filled in pores by disposing the metal powder at a predetermined portion and melting the metal powder using a laser metal deposition (LMD) method. When using glass as the filling material, the glass may be filled in the pores by melting the glass by calcination. When using ceramics as the filling material, the filled portion 11 may be formed by, for example, supplying a liquid containing ceramics having a powder shape between the first dam 8 and the second dam 9 and then sintering the same.

As described above, the filling material is preferably supplied with a depth reaching the electrolyte layer 2.

### (Step S6) Bonding of the metal frame 7 and the laminate 5

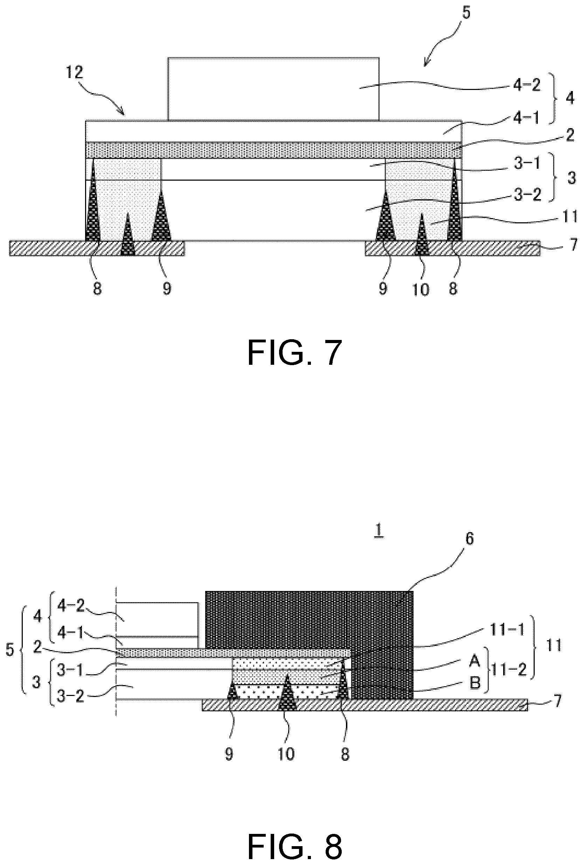

Next, as shown in FIG. 7, the laminate 5 is disposed on the metal frame 7. Then, the filled portion 11 and the metal frame 7 are bonded by welding. Accordingly, the welded portion 10 is formed, and the laminate 5 is fixed to the metal frame 7. The welded portion 10 may be formed by, for example, laser welding or soldering.

### (Step S7) Formation of the sealing material 6

Next, the sealing material 6 is formed so that the end portion of the exposed portion 12 and the laminate 5 are covered. Accordingly, a solid electrolyte fuel cell having the structure shown in FIGS. 1 and 2 is obtained. In this case, as already described, since the surface roughness of the exposed portion 12 is roughened, the sealing material 6 may be firmly bonded to the laminate 5 by the anchoring effect.

Here, when using glass as the sealing material 6, for example, the sealing material 6 may be formed by disposing glass powder at a position where the sealing material 6 is to be formed and melting the same by heating. Alternatively, the sealing material 6 may be formed by preparing a binder resin in which the glass powder is dispersed, applying the binder resin to a predetermined position of the laminate 5, and sintering the same. Alternatively, the sealing material 6 may be formed by disposing a green sheet containing glass powder at a predetermined position and sintering the same.

According to the method described above, in steps S1 to S2, the green sheet laminate 5' is sintered at once. Thereafter, the exposed portion 12, the first dam 8, the second dam 9, and the filled portion 11 are formed. According to such method, there is no need to individually perform a sintering process for forming each layer, and the sintering process can be performed at once, thereby minimizing costs required for sintering.

In addition, in the example described above, a case in which the dam and the filled portion 11 are formed in steps S4 to S5 after forming the exposed portion 12 in step S3 has been described. However, the order thereof is not limited thereto. For example, the exposed portion 12 may be formed after forming the first dam 8, the second dam 9, and the filled portion 11.

Heretofore, the first embodiment has been described. Hereinafter, a representative configuration and an operational effect thereof in the present embodiment will be summarized.

According to the present embodiment, the solid oxide fuel cell 1 has a porous first electrode structure 3, the electrolyte layer 2 laminated on the first electrode structure 3, and the second electrode structure 4 laminated on the electrolyte layer 2. The first electrode structure 3 includes the first porous metal support layer 3-2 and the first electrode layer 3-1 provided between the first porous metal support layer 3-2 and the electrolyte layer 2. In the first electrode structure 3, the filled portion 11 that is a region where the pores are filled with the filling material and is disposed so as to be in a looped shape when viewed along the laminating direction and the first dam 8 that is positioned at the outer side of the filled portion 11 when viewed along the laminating direction and is a densified portion for preventing the filling material from leaking to the outer side of the filled portion 11 are provided. According to adopting such a configuration, the softened filling material is blocked by the first dam 8 even when the filling material is softened at the filled portion 11 at high temperature. Therefore, the gas sealability is maintained even at high temperature and high internal pressure.

In a preferred aspect, the second dam 9 that is formed at the inner side of a filled portion 11 when viewed along the laminating direction and is a densified region for preventing a filling material from leaking to the inner side of the filled portion 11 is further provided in a first electrode structure 3. According to adopting such a configuration, when filling the filling material in the filled portion 11, the filling material is blocked by the second dam 9, and thus the filling material may be prevented from unintentionally leaking to the inner side. In addition, the softened filling material may be prevented from leaking to the inner side during operation.

In a preferred aspect, the first dam 8 is provided in a depth reaching to an electrolyte layer 2 from a surface of a first electrode structure 3. In addition, the second dam 9 is provided in a smaller depth than that of the first dam 8 from the surface of the first electrode structure 3. According to such a configuration, since the first dam 8 is provided in a depth reaching the electrolyte layer 2, the filling material is more reliably prevented from leaking to the outer side. In addition, since the second dam 9 does not reach the electrolyte layer 2, the electrolyte layer 2 is not damaged. Therefore, gas leakage between the two electrodes through a damaged electrolyte layer 2 is prevented.

In the preferred aspect, the first electrode structure 3 is provided under a metal frame 7. The first electrode structure 3 is bonded to the metal frame 7 in a filled portion 11. More preferably, the first electrode structure 3 is bonded to the metal frame 7 by welding. According to adopting such a configuration, the first electrode structure 3 may be firmly bonded to the metal frame 7, thereby increasing mechanical strength.

In a preferred aspect, the filled portion 11 is provided in a depth reaching to the electrolyte layer 2 from the surface of the first electrode structure 3. According to adopting such a configuration, leakage of gas supplied to the first electrode structure 3 is more reliably prevented.

In a preferred aspect, a second electrode structure 4 includes a second porous metal support layer 4-2, and the second electrode layer 4-1 formed between the second porous metal support layer 4-2 and the electrolyte layer 2. According to such configuration, since the metal support layer is also provided at the second electrode structure 4 side, a configuration of a laminate 5 becomes a symmetrical structure based on the electrolyte layer 2. Since the structure is symmetrical, warpage of the laminate 5 can be reduced during sintering of the green sheet laminate 5'.

In a preferred aspect, a solid oxide fuel cell 1 further includes the sealing material 6. The exposed portion 12 in which the second electrode layer 4-1 or the electrolyte layer 2 is exposed is provided at an outer peripheral portion of the second electrode structure 4 side. The sealing material 6 is provided to cover the end portion of the laminate 5 and the exposed portion 12. According to such a configuration, the sealing material 6 can be firmly bonded to the end portion of the laminate 5 since the sealing material 6 is bonded to the second electrode layer 4-1 or the electrolyte layer 2 in the exposed portion 12.

The manufacturing method of the solid oxide fuel cell 1 according to the present embodiment includes manufacturing the green sheet laminate 5' in which the green sheet 3' for the first electrode structure, the green sheet 2' for the electrolyte layer, and the green sheet 4' for the second electrode structure are laminated, sintering the green sheet laminate 5' to manufacture the sintered laminate, forming the first dam 8 in the first electrode structure 3 so as to have a looped shape when viewed along the laminating direction after manufacturing of the sintered laminate, and supplying the filling material to the first electrode structure 3 in a region inside the first dam 8 when viewed along the laminating direction to form the filled portion 11. According to such a method, only one sintering is required to obtain the laminate 5. Therefore, costs required for sintering is reduced.

In a preferred aspect, the manufacturing method according to the present embodiment further includes forming the second dam 9 having a looped shape in a region inside the first dam 8 when viewed along the laminating direction after the manufacturing of the sintered laminate. The forming of the filled portion 11 includes supplying the filling material between the first dam 8 and the second dam 9. According to such method, the filling material is blocked by the first dam 8 and the second dam 9 when the filling material is filled. Therefore, the filling material is prevented from leaking to an unintended region during manufacturing.

In a preferred aspect, the second electrode structure 4 includes the second porous metal support layer 4-2 and the second electrode layer 4-1 provided between the second porous metal support layer 4-2 and the electrolyte layer 2. In addition, after the manufacturing the sintered laminate, at least a part of the second electrode structure 4 is removed so that the second electrode layer 4-1 or the electrolyte layer 2 is exposed in the outer peripheral portion of the sintered laminate, thereby forming the exposed portion 12. In addition, the sealing material 6 is provided to cover the exposed portion 12 and the end portion of the sintered laminate. According to such method, the exposed portion 12 with a rough surface is formed by removing a part of the outer portion of the second electrode structure 4 after sintering. Then, the sealing material 6 can be firmly bonded to the laminate 5 by the anchoring effect by bonding the sealing material 6 to the exposed portion 12. In addition, the exposed portion 12 can be formed by processing the sintered laminate after sintering the green sheet laminate 5'. Since the exposed portion 12 can be formed by a simple processing, it is also advantageous in terms of manufacturing costs.

### [Second Embodiment]

Next, a second embodiment will be described. In the present embodiment, a configuration of a filled portion 11 is further devised. In the present embodiment, description is omitted for a part that may adopt the same configuration as in the first embodiment.

FIG. 8 is a schematic cross-sectional view showing an end portion of a solid oxide fuel cell 1 according to the present embodiment. In the present embodiment, a first electrode layer 3-1 is a porous ceramic layer. In addition, a diameter of a pore of the first electrode layer 3-1 is smaller than a diameter of a pore of a first porous metal support layer 3-2. A filled portion 11 is provided in a depth reaching to an electrolyte layer 2 from a surface (lower surface) of a first electrode structure 3.

In the above-described configuration, since there are two layers with different sizes of the pore diameter in the first electrode structure 3, it is difficult to uniformly fill the filling material in both. Therefore, a part described hereinafter is devised in the present embodiment.

That is, the filled portion 11 has a first filled portion 11-1 and a second filled portion 11-2 in the present embodiment.

The first filled portion 11-1 is a region where pores are filled in the first electrode layer 3-1. A first particle is filled in the first filled portion 11-1 as a filling material. The first particle has a particle diameter smaller than the diameter of the pore of the first electrode layer 3-1. A ceramic particle such as ceria is used as the first particle.

On the other hand, the second filled portion 11-2 is a region where pores are filled in the first porous metal support layer 3-2. A second particle is filled in the second filled portion 11-2 as the filling material. A particle with a particle diameter larger than that of the first particle is used as the second particle. However, the particle diameter of the second particle is smaller than the pore diameter of the first porous metal support layer 3-2.

As described above, the first electrode layer 3-1 having small pore diameter is filled with the first particle having a small particle diameter in the present embodiment. The first porous metal support layer 3-2 having a large pore diameter is filled with the second particle having a large particle diameter. Since the particle having the particle diameter corresponding to the pore diameter is filled as the filling material, the filling material may be densely filled throughout the entire filled portion 11.

Furthermore, the second filled portion 11-2 is filled with a mixture of ceramics and metal (cermet) as the second particle. In addition, in the second filled portion 11-2, a ratio of ceramics to metal of the filling material is different in a depth direction. Specifically, the ratio of ceramics to metal is large at a position close to the first electrode layer 3-1 (region A in the drawing), and the ratio of ceramics is smaller than that in region A (the ratio of metal is larger than that in region A) at a position close to the metal frame 7 (region B in the drawing).

As described above, the first electrode layer 3-1 is configured of ceramics. In the present embodiment, since the ratio of ceramics is large at the position close to the first electrode layer 3-1, affinity between the second filled portion 11-2 and the first electrode layer 3-1 is enhanced. On the other hand, since the ratio of metal is large at the position close to the metal frame 7, the affinity between the second filled portion 11-2 and the metal frame 7 is enhanced, thereby easily forming a welded portion 10.

Next, a manufacturing method of the solid oxide fuel cell 1 according to the present embodiment will be described. The solid oxide fuel cell 1 according to the present embodiment may be obtained by devising a processing of the forming of the filled portion 11 (step S5) in the first embodiment.

Specifically, the first particle is filled in the pores of the first electrode layer 3-1 by impregnating the first electrode layer 3-1 with a liquid (slurry) containing the first particle as the filling material in advance. Filling of the first particle may be performed at any step after the sintering of the green sheet laminate (step S2). For example, the liquid containing the first particle is supplied to an outer peripheral portion of the first electrode structure 3 after sintering of a green sheet laminate 5' and before formation of an exposed portion 12. In this case, a liquid with a viscosity that may penetrate the first porous metal support layer 3-2 is used as the liquid containing the first particle. Accordingly, the liquid containing the first particle penetrates the first porous metal support layer 3-2 and reaches the first electrode layer 3-1. Thereafter, if necessary, heat treatment or the like is performed and removal of solvent or the like is performed. By this, the first particle can be filled in the pores of the first electrode layer 3-1, and the first filled portion 11-1 can be formed in the first electrode layer 3-1.

Then, the mixture of metal and ceramics is filled between a first dam 8 and a second dam 9 as the second particle after forming of the first dam 8 and the second dam (after step S4). For example, the second particle is supplied between the first dam 8 and the second dam 9 in a state dispersed in a binder or the like. After supplying the second particle, sintering or the like is performed and binder or the like is removed as needed. In this case, a raw material with a large ratio of ceramics to metal is supplied first. Next, a raw material with a small ratio of ceramics to metal is filled. By this, the second filled portion 11-2 can be formed so that the ratio of ceramics to metal is different in the depth direction.

As described above, the filled portion 11 is provided in the depth reaching to the electrolyte layer 2 from the surface of the first electrode structure 3 in the present embodiment. In addition, the pore diameter in the first electrode layer 3-1 is smaller than the pore diameter in the first porous metal support layer 3-2. The first particle is filled in the first electrode layer 3-1 as the filling material, and the second particle having a larger particle diameter than that of the first particle is filled in the first porous metal support layer 3-2 as the filling material at the filled portion 11. Since a particle of the particle diameter corresponding to the pore diameter is filled, the first electrode layer 3-1 and the first porous metal support layer 3-2 can be densely filled with the filling material throughout the entire filled portion 11 even though the sizes of their pore diameters are different.

In addition, the first electrode layer 3-1 is the porous ceramic layer according to the present embodiment. Further, the mixture of ceramics and metal is filled in the first porous metal support layer 3-2 as the filling material at the filled portion 11. The ratio of ceramics to metal is large at the position close to the first electrode layer 3-1 and is small at the position close to the metal frame 7 in the filling material filled in the first porous metal support layer 3-2. According to such a configuration, the affinity between the second filled portion 11-2 and the first electrode layer 3-1 can be enhanced. In addition, the affinity between the metal frame 7 and the filled portion 11 is also be enhanced, thereby easily performing welding.

## Claims

1. A solid oxide fuel cell comprising:
a porous first electrode structure;
an electrolyte layer laminated on the first electrode structure, and
a second electrode structure laminated on the electrolyte layer,
wherein the first electrode structure comprises:
a first porous metal support layer, and
a first electrode layer provided between the first porous metal support layer and the electrolyte layer, and
wherein the first electrode structure comprises:
a filled portion that is a region where pores are filled with a filling material and is provided to be in a looped shape when viewed along a laminating direction; and
a first dam that is positioned at an outer side of the filled portion when viewed along the laminating direction and is a densified portion such that the filling material is prevented from leaking to the outer side of the filled portion.

2. The solid oxide fuel cell according to claim 1, wherein the first electrode structure further comprises a second dam that is provided at an inner side of the filled portion when viewed along the laminating direction and is a densified portion such that the filling material is prevented from leaking to the inner side of the filled portion.

3. The solid oxide fuel cell according to claim 2, wherein the first dam is provided in a depth reaching to the electrolyte layer from a surface of the first electrode structure, and
the second dam is provided in a smaller depth than that of the first dam from the surface of the first electrode structure.

4. The solid oxide fuel cell according to claim 1 or 2, further comprising a metal frame provided under the first electrode structure,
wherein the first electrode structure is bonded to the metal frame at the filled portion.

5. The solid oxide fuel cell according to claim 4, wherein the first electrode structure is bonded to the metal frame by welding.

6. The solid oxide fuel cell according to claim 5, wherein the first electrode layer is a porous ceramic layer,
in the filled portion, a mixture of ceramics and metal is filled in the first porous metal support layer, as the filling material, and
a ratio of ceramics to metal in the filling material filled in the first porous metal support layer is large at a position close to the first electrode layer and small at a position close to the metal frame.

7. The solid oxide fuel cell according to claim 1 or 2, wherein the filled portion is provided in a depth reaching to the electrolyte layer from a surface of the first electrode structure.

8. The solid oxide fuel cell according to claim 7, wherein a pore diameter in the first electrode layer is smaller than a pore diameter in the first porous metal support layer, and
in the filled portion, a first particle is filled as the filling material in the first electrode layer, and a second particle with a larger particle diameter than that of the first particle is filled as the filling material in the first porous metal support layer.

9. The solid oxide fuel cell according to claim 1 or 2, wherein the second electrode structure comprises:
a second porous metal support layer, and
a second electrode layer provided between the second porous metal support layer and the electrolyte layer.

10. The solid oxide fuel cell according to claim 9, further comprising a sealing material,
wherein an exposed portion where the second electrode layer or the electrolyte layer is exposed is provided at an outer peripheral portion of the second electrode structure side of the electrolyte layer, and
the sealing material is provided to cover an end portion of a laminate and the exposed portion, wherein the laminate consists of the first electrode structure, the electrolyte layer, and the second electrode structure.

11. A manufacturing method for manufacturing the solid oxide fuel cell of claim 1, the manufacturing method comprising:
manufacturing a green sheet laminate in which a green sheet for the first electrode structure, a green sheet for the electrolyte layer, and a green sheet for the second electrode structure are laminated;
manufacturing a sintered laminate by sintering the green sheet laminate, wherein the sintered laminate consists of the first electrode structure, the electrolyte layer, and the second electrode structure;
forming the first dam in the first electrode structure after manufacturing the sintered laminate such that the first dam has a looped shape when viewed along the laminating direction; and
forming the filling portion by supplying the filling material to the first electrode structure in a region inside the first dam when viewed along the laminating direction.

12. The manufacturing method according to claim 11, further comprising
forming a second dam with a looped shape in a region inside the first dam when viewed in the laminating direction, after manufacturing the sintered laminate,
wherein the forming the filling portion comprises supplying the filling material between the first dam and the second dam.

13. The manufacturing method according to claim 11, wherein the second electrode structure comprises:
a second porous metal support layer; and
a second electrode layer provided between the second porous metal support layer and the electrolyte layer,
wherein the manufacturing method further comprises:
forming an exposed portion by removing at least a part of the second electrode structure such that the second electrode layer or the electrolyte layer is exposed in an outer peripheral portion of the sintered laminate, after the manufacturing the sintered laminate; and
providing a sealing material to cover the exposed portion and an end portion of the sintered laminate.
